# EUROPÄISCHE PATENTANMELDUNG

(11) **EP 0 849 901 A2**
(43) Veröffentlichungstag der Anmeldung: **24.06.1998**
(21) Anmeldenummer: 97114149.4
(22) Anmeldetag: 16.08.1997
(51) Int. Cl.: H04B 10/24

(54) **Bidirektionaler optischer Verstärker mit optischem Isolator**

(30) Priorität: 20.12.1996 DE 19653276
(71) Anmelder: ROBERT BOSCH GMBH, 70442 Stuttgart (DE)
(72) Erfinder: Kohn, Ulrich, 71522 Backnang (DE)

(57) **Zusammenfassung**

Bidirektionaler optischer Verstärker mit optischem Isolator, dessen Übertragungsrichtung elektrisch umschaltbar ist. Die Umschaltbarkeit erleichtert die Verwendung des Verstärkers in Übertragungsstrecken, die wahlweise in der einen oder anderen Übertragungsrichtung betrieben werden, beispielsweise bei Netzumschaltungen bei Betriebsstörungen.

## Beschreibung

### Stand der Technik

Die Erfindung geht von der Gattung aus, wie in dem unabhängigen Anspruch 1 angegeben.

Wenn in einem Übertragungsring oder in einem -Netz, wie in der DE 43 18 732 A1 beschrieben, ein Netzabschnitt, also mindestens eine Lichtwellenleiter-Übertragungsstrecke ausfällt oder gestört ist, kann die Betriebssicherheit weiterhin dadurch gewährleistet werden, daß Streckenabschnitte umgeschaltet werden, um beeinträchtigte Teilnehmer des Ringes beziehungsweise Netzes über andere Übertragungswege zu erreichen oder zu versorgen. Dabei kann es vorkommen. daß eine Lichtwellenleiter-Übertragungsstrecke in einer anderen Übertragungsrichtung betrieben werden muß als im Normalbetrieb.

Ist in der Lichtwellenleiter-Übertragungsstrecke ein optischer Verstärker mit (wenigstens) einem Isolator vorgesehen, dann ist die Umschaltung der Übertragungsrichtung nur mit größerem Aufwand möglich; denn optische Verstärker sind zwar an sich bidirektional, nicht aber optische Isolatoren (wenn diese bidirektional arbeiten würden, hätten sie ja keine Isolatorwirkung mehr!). Zur Umschaltung der Übertragungsrichtung muß daher mindestens ein Überkreuzschalter vorgesehen werden, mit dessen Hilfe entweder die Übertragungsrichtung jedes einzelnen Isolators oder die Übertragungsrichtung des Verstärkers mitsamt allen seinen Isolatoren umgeschaltet wird.

Unter den optischen Isolatoren gibt es polarisationsabhängig und polarisationsunabhängig arbeitende.

Ein polarisationsabhängiger Isolator ist beispielsweise beschrieben in "Optische Nachrichtentechnik", Teil II, 2. Auflage, von H. G. Unger, S. 530f. Allerdings muß man sich dort im allgemeinen als Vorschalteinrichtung noch einen Polarisator hinzudenken, da nicht immer davon ausgegangen werden kann, daß die Strahlungsquelle linear polarisierte Strahlung liefert. Als Magnet ist üblichherweise ein Permanentmagnet vorgesehen. Der Prinzipaufbau eines solchen Isolators ist auch in "Laser, Lichtverstärker oder -oszillatoren" von Dr. Dieter Röss, Akademische Verlagsgesellschaft Frankfurt/Main, 1966, S. 95 beschrieben.

Ein polarisationsunabhängiger Isolator ist beschrieben in IEEE Photonics Technology Letters, Vol. 1, No. 3, March 1989, Seiten 68 bis 70.

Ein polarisationsunabhängiger Isolator wird auch in einem bekannten optischen Überkreuzschalter verwendet, der in einem Prospekt der FDK Corporation unter der Bezeichnung "2x2 OPTICAL SWITCH YS-111A" beschrieben ist. Mit diesem optischen Schalter können zwei Eingänge jeweils auf zwei Ausgänge geschaltet werden, wobei sich die Zuordnung kreuzweise vertauscht, wenn die Richtung eines Magnetfeldes elektrisch geändert wird.

### Vorteile der Erfindung

Der Anmeldungsgegenstand mit den Merkmalen des Anspruchs 1 hat folgenden Vorteil:

Der Einsatz eines bidirektionalen optischen Verstärkers in einer bidirektional betreibbaren Lichtwellenleiter-Übertragungsstrecke wird erleichtert. Die Umschaltbarkeit erleichtert die Verwendung des Verstärkers in Übertragungsstrecken, die wahlweise in der einen oder anderen Übertragungsrichtung betrieben werden, beispielsweise bei Netzumschaltungen bei Betriebsstörungen. Ein komplizierter und störanfälliger Überkreuzschalter, mit dem ein nicht in seiner Wirkungsrichtung umschaltbarer Isolator oder ein Verstärker mitsamt seinen Isolatoren umgepolt werden könnte, kann vermieden werden. Der Aufbau von Übertragungs-Ringen und -Netzen, in denen zur Erhöhung der Betriebssicherheit Reserve-Übertragungsstrecken und/oder bidirektional betreibbare Übertragungsstrecken vorgesehen sind, wird erleichtert.

Vorteilhafte Weiterbildungen sind in den abhängigen Ansprüchen angegeben, deren Merkmale auch, soweit sinnvoll, miteinander kombiniert werden können.

### Zeichnungen

Ausführungsbeispiele der Erfindung und ihrer Weiterbildungen sind in den Zeichnungen gezeigt und in der nachfolgenden Beschreibung näher erläutert. Es ist dargestellt in:
Figur 1: eine Prinzipdarstellung eines optischen Verstärkers mit zwei optischen Isolatoren,
Figur 2: eine Prinzipdarstellung eines optischen Verstärkers mit einem optischen Isolator und Steuermitteln für die Umschaltung des Isolators,
Figur 3: ein Ausführungsbeispiel für einen polarisationsunabhängigen umschaltbaren Isolator, der im Zusammenhang mit der Erfindung zum Einsatz kommen kann.

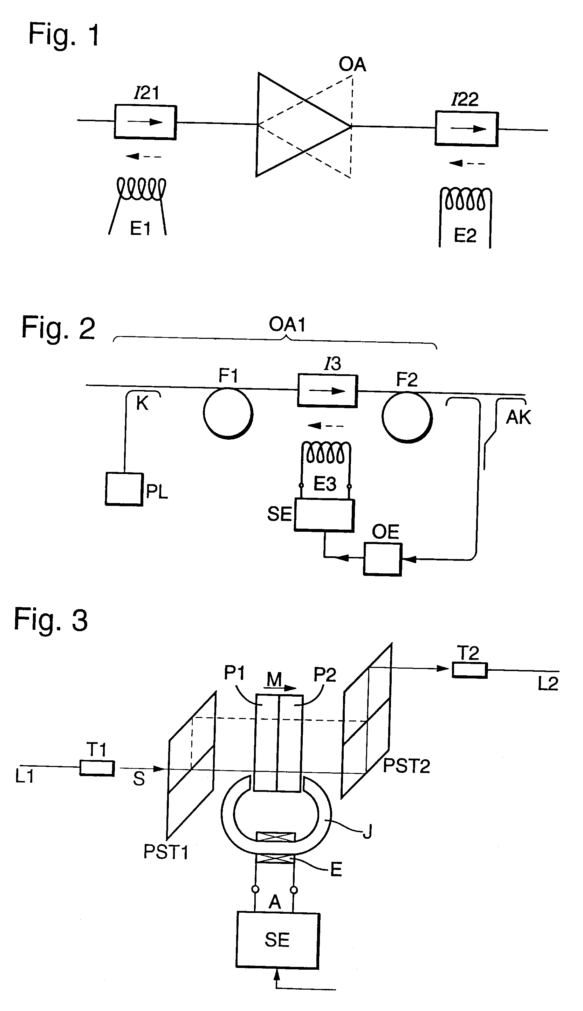

### Beschreibung des Ausführungsbeispiels nach Figur 1:

### Aufbau

Zwischen zwei Isolatoren I21, I22, deren Wirkungsrichtung umschaltbar ist, wie anhand von Figur 3 noch näher erläutert wird, ist über Lichtwellenleiter ein bidirektionaler optischer Verstärker OA geschaltet. In Betracht kommt insbesondere ein Faserverstärker mit einer erbiumdotierten Faser, der in beiden Richtungen betrieben werden kann, ohne daß ein Umschalten erforderlich ist.

### Funktion

Umgeschaltet werden müssen lediglich die Wirkungsrichtungen der Isolatoren über die angedeuteten Elektromagnete E1, E2. Auf diese Weise kann die gezeigte Anordnung wahlweise sowohl in der Übertragungsrichhtung entsprechend den durchgezeichneten Pfeilen als auch entsprechend den unterbrochenen Pfeilen betrieben werden.

### Aufbau des Ausführungsbeispiels nach Figur 2:

Hier ist ein optischer Faserverstärker OA1 weniger schematisch als in Figur 1 gezeigt. Er besteht aus zwei geeignet dotierten Faserstücken F1, F2 mit zwischengeschaltetem Isolator I3, dessen Wirkungsrichtung umkehrbar ist. Über einen Koppler K wird Pumpstrahlung von einer Pumpstrahlungsquelle PL zugeführt.

Zur Steuerung des Elektromagneten E3 sind Steuermittel SE vorgesehen, mit deren Hilfe der Elektromagnet umgepolt werden kann. Den Steuermitteln SE ist ein optoelektrischer Wandler OE vorgeschaltet, dem optische Steuersignale von einer Auskoppeleinrichtung AK zugeführt werden.

### Funktion des Details nach Figur 2: Wieder braucht zur Umkehr der Übertragungsrichtung und der

Verstärkungsrichtung nur die Wirkungsrichtung des Isolators I3 umgeschaltet zu werden, da ein Faserverstärker in beiden Richtungen weitgehend unabhängig davon verstärkt, in welcher Richtung die Pumpstrahlung eingespeist wird.

Die Steuerung der Wirkungsrichtung des Issolators I3 durch die Steuermittel SE erfolgt mittelbar über optische Seuersignale, die von der Auskoppeleinnrichtung AK ausgekoppelt und zusammen mit den optischen Signalen übertragen werden, die als Nutzsignale durch den Verstärker OA1 laufen. Die Nutzsignale und die Steuersignale benutzen also eine gemeinsame Übertragungswegstrecke.

### Aufbau des Ausführungsbeispiels eines umschaltbaren Isolators nach Figur 3:

Im Luftspalt eines weichmagnetischen Joches J eines Elektromagneten E liegt eine Platte P1 eines magnetooptischen Materials, die einen Faraday-Rotator bildet, und eine Halbwellenplatte P2, die magnetfeldunabhängig eine Drehung der Polarisationsebene von hindurchgeleitetem Licht um 45° bewirkt, und zwar unabhängig von der optischen Strahlungsrichtung, also beispielsweise immer im Uhrzeigersinn. Die Richtung des Magnetfeldes des Elektromagneten E ist mit dem Pfeil M angedeutet. Durch den Elektromagnet E wird nur beim Ein- und Umschalten Strom geleitet; für den darauffolgenden Betrieb genügt das remanente Magnetfeld. Die Richtung des Magnetfeldes ist umkehrbar durch kurzzeitiges Anlegen einer umpolenden Gleichspannung an die Anschlüsse A des Elektromagneten. Dazu sind Steuermittel SE vorgesehen.

An einem Tor T1 des gezeigten Isolators ein Lichtwellenleiter L1 und an einem Tor T2 ein Lichtwellenleiter L2 angeschlossen. Dem Faraday-Rotator ist eine Vor- und eine Nachschalteinrichtung in Gestalt eines polarisierenden Strahlteilers PST 1 beziehungsweise PST2 vor- beziehungsweise nachgeschaltet.

### Funktion des bevorzugten Ausführungsbeispiels nach Figur 3:

Ein Strahl S aus dem Lichtwellenleiter L1 gelangt zunächst in den polarisierenden Strahlteiler PST 1 und wird dort in zwei unterschiedlich polarisierte Teilstrahlen aufgeteilt, deren Polarisationsebene in der magnetooptischen Platte P1 um 45° gedreht und in der Halbwellenplatte P2 wieder um 45° zurückgedreht wird. In dem polarisierenden Strahlteiler PST2 werden die Teilstrahlen wieder miteinander vereinigt und gelangen über das Tor T2 in den Lichtwellenleiter L2.

In umgekehrter Richtung kann sich das Licht nicht von T2 nach T1 ausbreiten. Zwar wird die Polarisationsebene in der Halbwellenplatte P2 wiederum um 45° gedreht, aber in der magnetooptischen Platte P1 nicht zurück, sondern weiter gedreht. Das hat zur Folge, daß die Teilstrahlen im Strahlteiler auf dessen untere Fläche gelenkt und dort reflektiert werden, so daß sie nicht in das Tor 1 gelangen können. Die Einrichtung nach Figur 3 wirkt demnach als optischer Isolator.

Erst nach Umkehr des Magnetfeldes mittels der Steuermittel SE kann ein Gegenstrahl vom Tor T2 zum Tor T1 gelangen, während dann der Weg von T1 nach T2 versperrt ist.

## Patentansprüche

1. Bidirektionaler optischer Verstärker mit optischen Isolator , dadurch gekennzeichnet, daß die Übertragungsrichtung des optischen Isolators elektrisch umschaltbar ist.

2. Verstärker nach Anspruch 1, dadurch gekennzeichnet, daß der optische Isolator wenigstens zwei um 45° gegeneinander gedrehte Polarisationsfilter mit zwischengeschalteter Einrichtung zur nichtreziproken Drehung der Polarisationsebene aufweist.

3. Verstärker nach Anspruch 1, dadurch gekennzeichnet, daß der Isolator polarisationsunabhängig ist.

4. Verstärker nach Anspruch 3, dadurch gekennzeichnet, daß der Isolator wenigstens einen polarisationsabhängigen optischen Strahlteiler und eine Einrichtung zur nichtreziproken Drehung der Polarisationsebene sowie Mittel zur reziproken Änderung der Drehrichtung aufweist.

5. Verstärker nach einem der vorangehenden Ansprüche, dadurch gekennzeichnet, daß er Teil eines Repeaters ist.

6. Verstärker nach einem der vorangehenden Ansprüche, dadurch gekennzeichnet, daß er in eine Übertragungsstrecke eingeschaltet ist, die Teil eines Übertragungs-Ringes oder -Netz ist.

7. Verstärker nach einem der vorangehenden Ansprüche, dadurch gekennzeichnet, daß der Isolator folgendes aufweist:
- magnetooptische Mittel (P1), die in einem Magnetfeld angeordnet sind und die unter dessen Einfluß die Polarisationsebene eines durchgeleiteten optischen Strahles (S) mit fortschreitender Strahlungsausbreitung drehen,
- eine Vor- und eine Nachschalteinrichtung (PST1, P2, PST2), die den magnetooptischen Mitteln (P1) vor- beziehungsweise nachgeschaltet sind und die Polarisationsebene des Strahles so beeinflussen, daß dieser trotz der Drehung seiner Polarisationsebene in den magnetooptischen Mitteln den Isolator passieren kann, während ein Gegenstrahl nicht durchgelassen wird,
und daß die Richtung (M) des Magnetfeldes mit Hilfe von Steuermitteln (SE) umkehrbar ist, so daß nach Umkehr des Magnetfeldes nur noch der Gegenstrahl passieren kann.

8. Verstärker nach Anspruch 7, dadurch gekennzeichnet, daß die Steuermittel (SE) zum Umpolen eines Elektromagneten (E) vorgesehen sind, der das Magnetfeld erzeugt.

9. Verstärker nach Anspruch 7 oder 8, dadurch gekennzeichnet, daß die Steuermittel (SE) mittelbar durch optische Steuersignale steuerbar sind.

10. Verstärker Anspruch 9, dadurch gekennzeichnet, daß für die optischen Steuersignale und die optischen Signale eine gemeinsame Übertragungswegstrecke vorgesehen ist.

11. Verstärker nach einem der vorangehenden Ansprüche, dadurch gekennzeichnet, daß er für beide Übertragungsrichtungen dadurch sperrbar ist, daß die Übertragungsrichtungen von zwei seiner Isolatoren gegeneinander schaltbar sind.
